# EUROPEAN PATENT SPECIFICATION

(11) **EP 0 512 854 B1**
(45) Date of publication and mention of the grant of the patent: **10.09.1997**
(21) Application number: 92304160.2
(22) Date of filing: 08.05.1992
(51) Int. Cl.: H04N 7/24, H04N 7/50

(54) **Video signal coding**
Kodierung von Videosignalen
Codage des signaux vidéo

(30) Priority: 09.05.1991 JP 132114/91
(43) Date of publication of application: 11.11.1992
(73) Proprietor: SONY CORPORATION, Tokyo 141 (JP)
(72) Inventor: Tahara, Katsumi, Shinagawa-ku, Tokyo (JP)
(74) Representative: Robinson, Nigel Alexander Julian

(56) References cited:
- EP-A- 0 282 135
- US-A- 4 837 618
- US-A- 4 999 704
- SIGNAL PROCESSING OF HDTV 2,30 AUGUST - 1ST SEPTEMBER, 1989, L. CHIARIGLIONE (ED.) 30 August 1989, AMSTERDAM pages 739 - 748 R. KUTKA 'Block adaptive frame/field DCT coding decided by the vertical difference test'

## Description

This invention relates to video signal coding. More particularly, but not exclusively, this invention relates to video signal coding to compress a video signal for transmission.

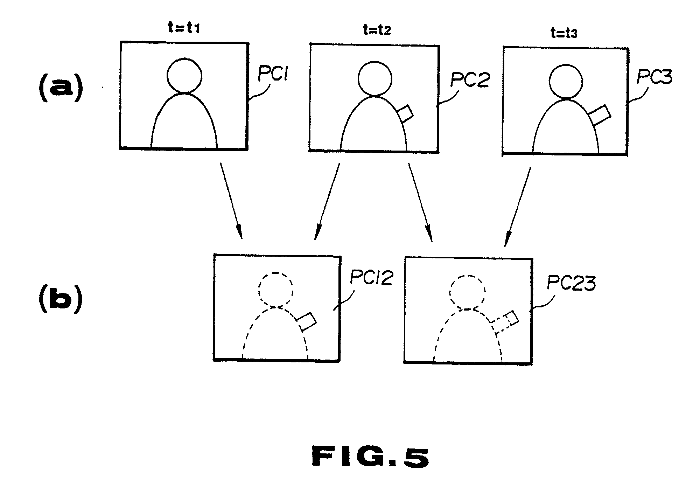

Japanese Published Patent Application JP-A-63 1183 describes a video signal transmission system, for use in a television telephone system, a conference telephone system, etc., that performs an efficient coding upon a video signal representing a moving picture so that intraframe coded data or interframe coded data is generated for transmitting a moving picture video signal through a transmission path in which there is a relatively rigorous restriction upon the transmission capacity. In this video transmission system, by making use of the fact that in the case where an attempt is made to transmit respective pictures PC1, PC2, PC3 ... each constituting a moving picture at time t=t1, t2, t3, ... (as shown in Figure 5 of the accompanying drawings), for example, a video signal is characterized in that it has high auto-correlation with respect to the lapse of time and processing may be carried out to implement compression of the picture or image data to be transmitted and thereby improve the transmission efficiency. The compression processing of the picture data includes:
(i) an intraframe coding processing to compare respective pixel data within respective frames of respective pictures PC1, PC2, PC3, ... (as shown in Figure 5(a)) to exploit the auto-correlation between pixel data within the same frame to determine differences therebetween and to thereby produce for transmission compressed picture data; and
(ii) an interframe coding processing to determine picture data PC12, PC23, ... (as shown in Figure 5(b)) comprised of differences of pixel data between pictures adjacent in succession like pictures PC1 vs PC2, PC2 vs PC3, ..., etc. (as shown in Figure 5(a)) for transmission along with picture data that has been intraframe coded with respect to the initial picture PC1 at time t=t1 .

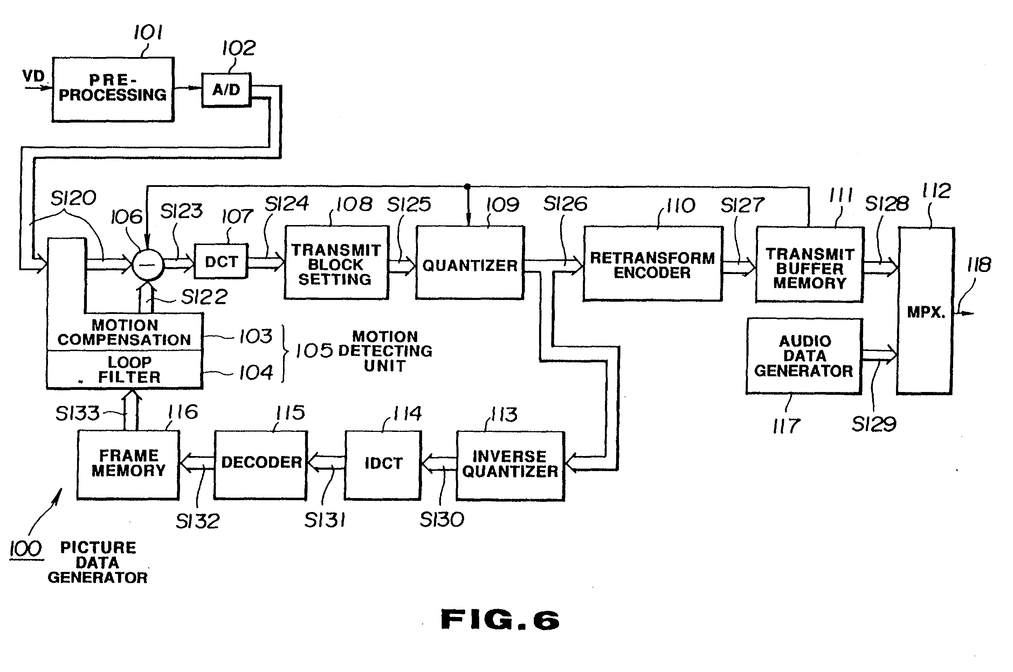

Such processing for coding a video signal is executed in a picture or image data generator having a structure as shown, for example, in Figure 6 of the accompanying drawings.

In Figure 6, an input video signal VD is delivered to a pre-processing circuit 101. The pre-processing circuit 101 implements a pre-processing step (e.g. half field dropping processing and half field line thinning processing, etc.) to the input video signal VD delivered thereto and outputs a pre-processed signal to an analog to digital (A/D) converter 102. A transmit unit block (this will hereafter be called a "macro block") of data S120 comprised of data formed of 16 pixels (in a horizontal direction) x 16 pixels (in a vertical direction) constituting luminance signals and chroma signals is outputted from the A/D converter 102. The macro block data S120 is delivered to a picture or image encoder 106 through a motion detecting unit 105 comprising a motion detector 103 and a loop filter 104.

It is efficient for macro block data S120 having high correlation in the time base direction of the moving pictures to employ a method of encoding differences between respective frames. However, in the case of the occurrence of a scene change, or a picture having a sudden movement, motion correlation between respective frames becomes lower and employing of a method of encoding the original pictures themselves rather than the method of encoding differences permits the compression efficiency to be improved. For this reason, the motion detecting unit 105 makes a comparison between data of the current or present frame delivered as the macro block data S120 and earlier frame data S133 delivered through the loop filter 104 from a frame memory 116, which will be described later, to detect motion in the picture. Then, compensation corresponding to the detected motion is applied to the earlier frame data S133. The data thus obtained is outputted to the picture data encoder 106 as predicted current frame data S122. The loop filter 104 is applied in order to prevent problems in display images or pictures, and is turned ON, e.g., when the above-mentioned motion compensation is carried out.

The picture data encoder 106 performs operations defined by the following equations (1) to (7) upon the macro block data S120 and the predicted current frame data S122 delivered thereto. 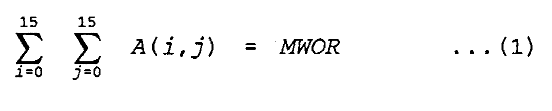 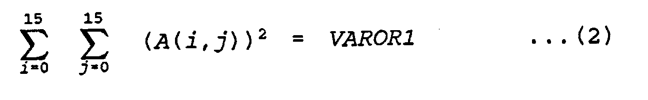 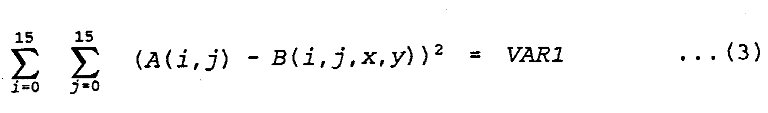 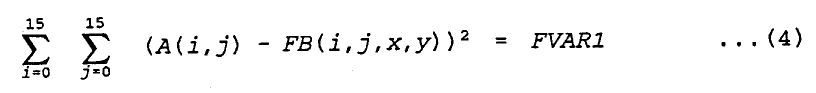 $\text{(} \text{VAROR1} \text{/256) - (} \text{MWOR} {\text{/265)}}^{\text{2}} \text{=} \text{VAROR2}$$\text{(} \text{VAR1} \text{/256) =} \text{VAR2}$$\text{(} \text{FVAR1} \text{/256) =} \text{FVAR2}$

In the above equations a pixel at coordinates (i, j) of a macro block of an original block is A(i, j), a pixel at (i, j) coordinates of a macro block earlier by one block and in which a motion compensated motion vector (x, y) has been taken into consideration is B(i, j, x, y), and a pixel when the loop filter 104 is applied to the pixel at (i, j) coordinates of the macro block earlier by one frame and in which the motion compensated motion vector (x, y) has been taken into consideration is FB(i, j, x, y). The picture data encoder 106 acts:
as indicated by the above equation (1), to calculate the sum of all pixel data within the macro block subject to processing (hereinafter referred to as MWOR);
as indicated by the above equation (2) to calculate the sum of the squares of all pixel data within the macro block (hereinafter referred to as VAROR1);
as indicated by the equation (3), to calculate the sum of the squares of a value obtained by subtracting pixel data of the motion compensated earlier frame macro block from pixel data of a macro block of the current or present frame (hereinafter referred to as VAR1); and
as indicated by the above equation (4), to calculate the sum of the squares of a value obtained by subtracting data when the loop filter 104 is applied to pixel data of the motion compensated earlier frame macro block from pixel data of the macro block of the current frame (hereinafter referred to as FVAR1).

In the case where there is no motion compensation in the above equations (3) and (4), x and y are both equal to zero.

Then, the picture data encoder 106, on the basis of four values MWOR, VAROR1, VAR1 and FVAR1 determined by the above operations, acts:
as indicated by the above equation (5), to calculate a value (hereinafter referred to as VAROR2) obtained by subtracting the square of a value obtained by dividing MWOR by 256 from a value obtained by dividing the VAROR1 by 256 (in the case where data processing of the macro block is carried out by 8 bits, for example);
as indicated by the above equation (6), to calculate a value (hereinafter referred to as VAR2) obtained by dividing VAR1 by 256; and
as indicated by the above equation (7), to calculate a value (hereinafter referred to as FVAR2) obtained by dividing FVAR1 by 256.

VAROR2 represents a weighting of the original picture, VAR2 represents a weighting of a predictive error when the loop filter 104 is not applied, and FVAR2 represents a weighting of a predictive error when the loop filter 104 is applied.

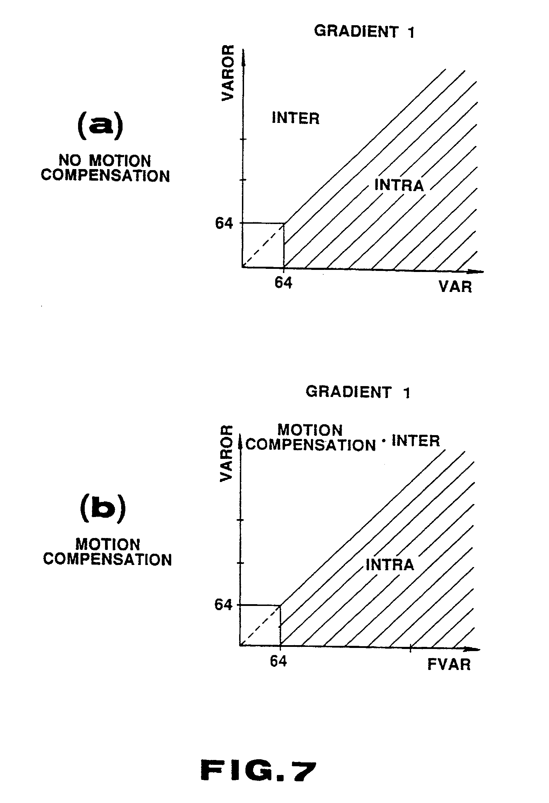

In the case where there is no motion compensation, the picture data encoder 106 tests the value of VAROR2 and the value of VAR2 with a graph as shown in Figure 7(a) to output, when the point (VAR2, VAROR2) falls within the slanting lines, intra frame coded data (intra data) which is a difference between the macro block data S120 and reference value data, and to output, when the point (VAR2, VAROR2) falls outside the slanting lines, inter frame coded data (inter data) which is a difference between the predicted current frame data S122 and the macro block data S120.

In the case where there is motion compensation, the picture data encoder 106 tests the value of VAROR2 and the value of VAR2 with a graph as shown in Figure 7(b), for example, to output, when the point (VAR2, VAROR2) falls within the slanting lines, the data as intra data, and, when the point (VAR2, VAROR2) falls outside the slanting lines, to output the data as inter data.

A threshold level is set in the picture data encoder 106, and in the case where either the value of VAROR2 or the value of VAR2 or both values is or are less than 64, as shown in Figures 7(a) and (b), the picture data encoder 106 outputs the data as inter data. Inter data or intra data outputted from the picture data encoder 106 is delivered to a transform encoder 107 as difference data S123.

The transform encoder 107 includes a Discrete Cosine Transform circuit (DCT circuit), and serves to orthogonally transform the difference data S123 delivered to it into efficiently coded data (transformed coded data S124) for output to a transmit block setting circuit 108.

The transmit block setting circuit 108 may be supplied with a threshold level of a predetermined level. The transmit block setting circuit 108 determines a range of transmission from the transformed coded data S124 delivered thereto to deliver it as transmit block patterned data S125 to a quantizer 109.

The quantizer 109 is supplied with residual data S128 from the transmit buffer memory 111 indicating the residual of the current or present buffer area. The quantizer 109 quantizes the transmit block patterned data S125 with a quantization step width dependent upon the residual data S128 to produce quantized picture data S126 that is output to a retransform encoder 100 and an inverse quantizer 113.

The retransform encoder 110 comprises a Variable Length Coding circuit or encoder (VLC circuit), etc. The retransform encoder 110 implements efficient VLC coding to the quantized picture data S126 and outputs transmit picture data S127 to the transmit buffer 111. The retransform encoder 110 can, if desired, serve to drop all the quantized picture data S126 or a portion thereof to thereby carry out so called a frame dropping.

The transmit buffer memory 111 stores the transmit picture data S127 input to it. This stored transmit picture data S127 is read out at a predetermined transmission rate to a multiplexer 112. Further, the transmit buffer memory 111 outputs residual data indicating the residual of the memory area for storing the transmit picture data S127 to the quantizer 109 and the picture data encoder 106. When the quantizer 109 and the picture data encoder 106 determine or recognize, from the residual data supplied thereto, that there is no room in the memory area of the transmit buffer memory 111, they stop the coding of picture data and quantization thereof, respectively. Thus, there results a frame dropped state, and an overflow, etc, in the transmit buffer memory 111 is prevented.

The multiplexer 112 synthesizes the transmit picture data S127 received from the transmit buffer memory 111 and audio data S129 received from an audio data generator 117 and outputs this synthesized data on a transmission path 118.

The inverse quantizer 113 performs inverse quantization upon the quantized picture data S126 received from the quantizer 109 and outputs it as inverse quantized data S130 to an inverse transform encoder 114 (IDCT).

The inverse transform encoder 114 receives the inverse quantized data S130 and performs an inverse orthogonal transformation opposite to that of the transform encoder 107 so that inverse orthogonally transformed data is output as inverse transformed coded data S131 to a decoder 115.

The decoder 115 decodes the received inverse transformed coded data S131 and outputs it as coding difference data S132 to a frame memory 116. This data represents the picture information outputted as the transmit picture data S127.

The predicted earlier frame data previously stored in the frame memory 116 is subjected to modification by the coding difference data S132 as it is received. The frame memory 116 stores the modified data as new predicted earlier frame data S133.

The predicted earlier frame data S133 stored in the frame memory 116 is read out by the motion detecting unit 105, and is subjected to motion compensation by the motion compensation circuit 103, as described above, to produce the predicted current frame data S122. The frame data thus obtained is output to the picture data encoder 106. The above-described data processing is repeated as a continuous process.

Compressed and coded video data is in this way supplied to a decoding side (not shown) through the transmission path 118 and is reproduced by a decoding processing opposite to that of the above-described coding processing. Thus, e.g., an audio signal is delivered to a speaker, etc., and a video signal is delivered to a monitor device, etc.

The above-described coding apparatus for video signals is such that the picture data encoder 106 must calculate average or variance, etc. for all the pixels of the macro block requiring a large amount of data processing in order to select whether the video data should be outputted as inter data or intra data. It takes a relatively long time to carry out such a large amount of data processing and a large number of operational circuits, etc. are required. As a result, the size of this coding apparatus for video signals is large.

Further, the above-mentioned coding apparatus for video signals has to effect a control so as to stop both the picture data encoder 106 and the quantizer 109 in dependence upon the residual of the memory area in the transmit buffer memory 111 in order to prevent an overflow, etc. in the transmit buffer memory 111. For this reason, control points for preventing such overflow, etc. are dispersed, so control becomes complicated. In addition, control of respective circuits becomes uncertain.

United States Patent No. US-A-4 999 704 discloses a picture data coding system in which one of an interframe or an intraframe coding technique is used depending upon the amount of coded data that is produced by each.

United States Patent No. US-A-4 837 518 discloses an image data coding system selectably using one of an intraframe or an interframe coding technique.

This invention provides apparatus for coding a video signal, said apparatus comprising:
intraframe coding means for intraframe coding a video signal;
interframe coding means for interframe coding a video signal;
first orthogonal transform means for orthogonally transforming intraframe coded data from said intraframe coding means;
second orthogonal transform means for orthogonally transforming interframe coded data from said interframe coding means; and
selector means for selecting for output said intraframe coded data or said interframe coded data on the basis of coefficient data from said first and second orthogonal transform means; characterised in that
said video signal is a digital video signal and said intraframe coding means and said interframe coding means encode said digital video signal to form macro blocks having n x n pixels; said first and second orthogonal transform means perform discrete cosine transformation upon said macro blocks; and
when a cumulative value of AC components of DCT coefficient data for said macro block determined by said second orthogonal transform means is less than a cumulative value of AC components of DCT coefficient data for said macro block determined by said first orthogonal transform means, said selector means selects interframe coded data; while, when said cumulative value of AC components of DCT coefficient data for said macro block determined by said second orthogonal transform means is more than said cumulative value of AC components of DCT coefficient data for said macro block determined by said first orthogonal transform means, said selector means selects intraframe coded data.

In accordance with this coding apparatus for a video signal, the first orthogonal transform means orthogonally transforms interframe coded data obtained by implementing interframe coding to a video signal to be transmitted, and the second orthogonal transform means orthogonally transforms intraframe coded data obtained by implementing intraframe coding to a video signal to be transmitted. Thereafter, the selector means selects the interframe coded data or the intraframe coded data on the basis of coefficient data delivered from the respective orthogonal transform means and outputs a selected one.

This invention also provides a method of coding a video signal said method comprising the steps of:
intraframe coding a video signal;
interframe coding a video signal;
orthogonally transforming intraframe coded data;
orthogonally transforming interframe coded data; and
selecting for output said intraframe coded data or said interframe coded data on the basis of coefficient data from orthogonal transformations of intraframe coded data and interframe coded data; characterized in that
said video signal is a digital video signal and said intraframe coding and serial interframe coding encode said digital video signal to form macro blocks (MB) having n x n pixel;
said orthogonally transforming intraframe coded data and said orthogonally transforming interframe coded data perform discrete cosine transformation (DCT) upon said macro blocks (MB); and
when a cumulative value of AC components of DCT coefficient data for said macro block (MB) determined by said orthogonal transforming of interframe coded data is less than a cumulative value of AC component of DCT coefficient data for said macro block (MB) determined by said orthogonal transforming of intraframe coded data, said interframe coded data is selected; while, when said cumulative value of AC components of DCT coefficient data for said macro block (MB) determined by said orthogonal transform of interframe coded data is more than said cumulative value of AC components of DCT coefficient data for said macro block (MB) determined by said orthogonal transforming of intraframe coded data, said intra-frame coded data is selected.

An embodiment of the invention will now be described, by way of example only, with reference to the accompanying drawings in which:
Figure 1 is a functional block diagram of a coding apparatus for a video signal according to one embodiment of this invention;
Figure 2 illustrates the manner of generating a macro block;
Figure 3 is a flowchart for explaining the discriminative operation for inter/intra discrimination of the coding apparatus;
Figure 4 is a block diagram showing an example of a decoding apparatus for decoding video data subject to coding by the video signal coding apparatus of Figure 1;
Figure 5 illustrates inter data and intra data;
Figure 6 is a functional block diagram of a known video signal coding apparatus;
Figure 7 illustrates inter/intra discrimination of the known video signal coding apparatus of Figure 6.

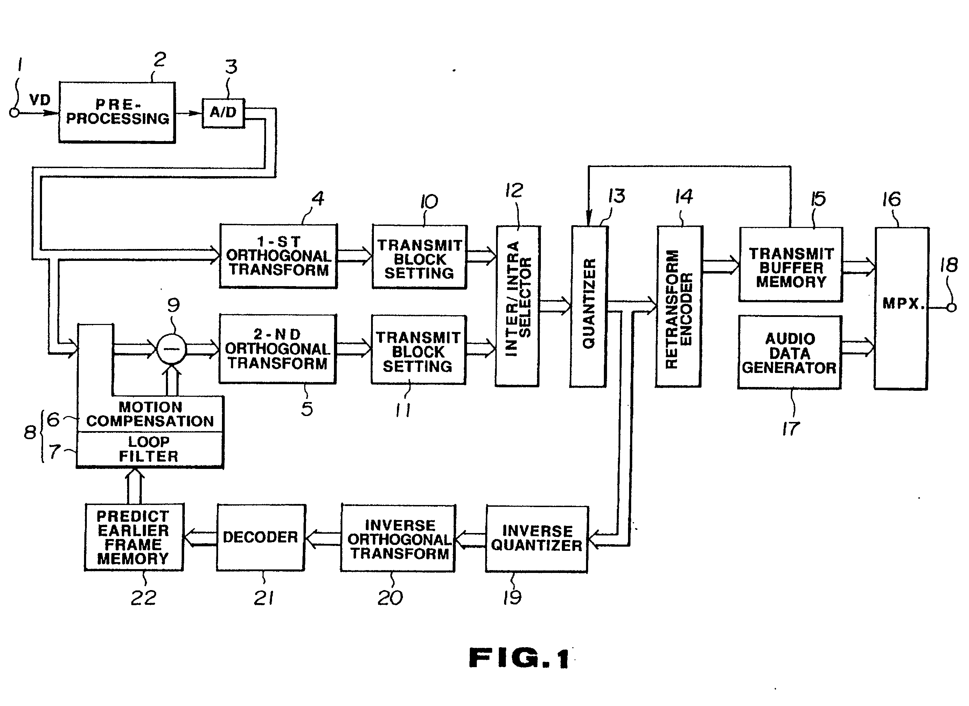

A coding apparatus for a video signal according to one embodiment of this invention has the configuration shown in Figure 1.

The coding apparatus for a video signal shown in Figure 1 is adapted so that an analog input video signal VD from an imaging section of a television telephone, for example, is delivered to a pre-processing circuit 2 through an input terminal 1.

The pre-processing circuit 2 pre-processes the analog input video signal VD delivered thereto to effect operations such as a half field dropping process or a half field line thinning process, etc., and outputs a pre-processed signal to an A/D converter 3.

The A/D converter 3 samples the analog input video signal VD delivered for each frame at a predetermined frequency to digitize it. From this A/D converter 3, macro block video data, which will be described later, is outputted.

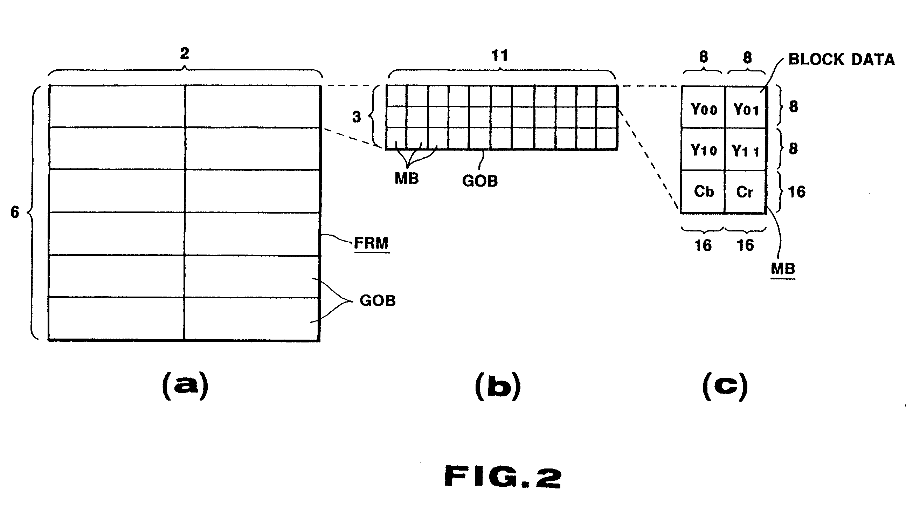

In order to generate macro block video data, the video data of each frame is divided into a group of blocks GOB of 2 (in a horizontal direction) x 6 (in a vertical direction) blocks as shown in Figure 2(a). Then, each block of the group of blocks GOB is divided into macro blocks of 11 (in a horizontal direction) x 3 (in a vertical direction) blocks as shown in Figure 2(b); in this way it is possible to output macro block video data (hereinafter referred to as macro block data). It is to be noted that each macro block is composed of luminance data Y00 to Y11 of 16 x 16 pixels (each is comprised of luminance data of 8 x 8 pixels) and colour data Cb, Cr corresponding to all of the pixels of the luminance data Y00 to Y11.

The macro block data of the current or present frame is directly delivered to a subtracter 9 through a motion compensation unit 8.

The above-mentioned macro data is also compared with a predetermined reference value and a difference determined by this comparison is delivered as intraframe coded data (intra data) to a first orthogonal transform circuit 4 serving as first orthogonal transform means.

The first orthogonal transform circuit 4 is comprised of, e.g., a Discrete Cosine Transform circuit (DCT circuit) and serves to orthogonally transform the intra data delivered thereto so that efficiency coded data may be output as transformed coded intra data to a transmission block setting circuit 10.

At the transmit block setting circuit 10, a threshold level of a predetermined level may be set. This transmit block setting circuit 10 determines a range transmission from the transformed coded intra data on the basis of this threshold level to deliver it as transmit block patterned intra data to an inter/intra selector 12.

The motion compensation unit 8 comprises a motion compensation circuit 6 and a loop filter 7. In the motion compensating unit 8 constructed as above, predicted earlier frame data derived from earlier frame data is input, independently of the macro block data, to the motion compensation circuit 6 through the loop filter 7 from a predict earlier frame memory 22, which will be described later. The motion compensation circuit 6 detects motion or movement of the picture from the macro block data of the current frame and the predicted earlier frame data it receives, and performs a compensation corresponding to the detected motion upon the predicted earlier frame data and outputs this as predicted current frame data to the subtracter 9. The loop filter 7 is applied in order to prevent problems with display pictures, and is turned ON, e.g., when motion compensation is carried out.

The subtracter 9 subtracts the predicted current frame data from the macro block data of the current frame delivered thereto to thereby generate interframe coded data (inter data), which is data indicating a detected difference between the macro block of the current frame and macro block data of the earlier frame, and outputs this to a second orthogonal transform circuit 5 serving as second orthogonal transform means.

The second orthogonal transform circuit 5 is comprised of, e.g., a DCT circuit similar to that of the first orthogonal transform circuit 4, and serves to orthogonally transform inter data delivered thereto so that efficiently coded data may be output as transformed coded inter data to the transmit block setting circuit 11.

At the transmit block setting circuit 11, a threshold level of a predetermined level may be set. This transmit block setting circuit 11 determines a range of transmission from the transformed coded inter data to deliver it as transmit block patterned inter data to the inter/intra selector 12.

The inter/intra selector 12 performs operations indicated by the following equations (8) to (10) with respect to the transmit block patterned intra data and transmit block patterned inter data delivered thereto.

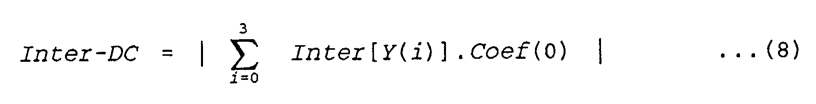

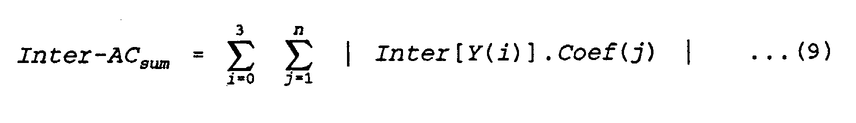

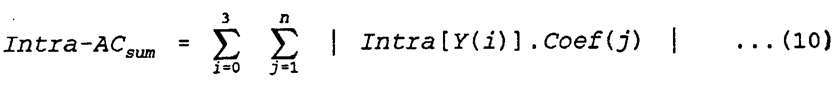

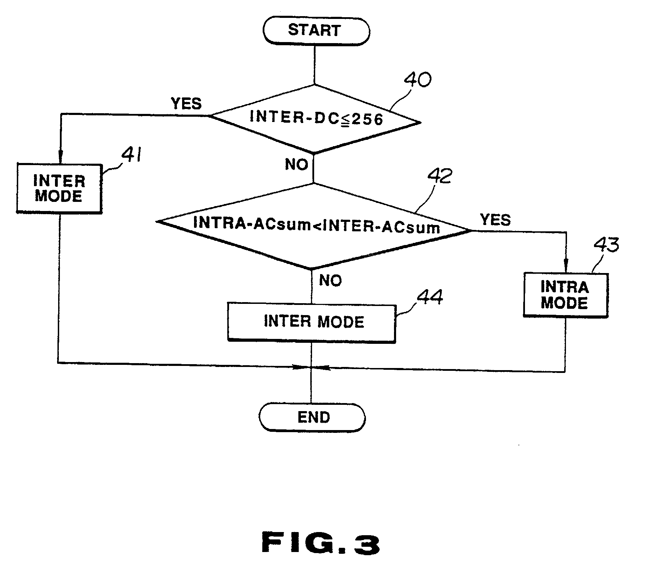

The inter/intra selector 12 first performs the operation indicated by equation (8) to calculate an average of the 0th pixel data (first pixel data within the macro block, i.e. the DC component of the inter DCT coded data) of the transmit block patterned inter data delivered at the macro block to use as a luminance level of the whole of the transmit block patterned inter data delivered by the macro block. Then, the inter/intra selector 12 performs the operation indicated by equation (9) to calculate a cumulative or accumulated added value of the absolute values of the AC components, which comprise all of the components except for the abovementioned DC component, of the transmit block patterned inter data delivered at the macro block. Then, the inter/intra selector 12 performs the operation indicated by equation (10) to calculate a cumulative or accumulated added value of the absolute values of the AC components of the transmit block patterned intra data delivered by the macro block. Then, the inter/intra selector 12 executes an algorithm as shown in Figure 3 on the basis of the values calculated by equations (8) to (10).

The flowchart shown in Figure 3 is started when the inter/intra selector 12 has completed the calculations given by equations (8) to (10).

The discriminative operation proceeds to step 40 to discriminate whether or not the DC component of the transmit block patterned inter data, calculated by the above equation (8), is less than a predetermined threshold level (e.g., 256). As a result, in the case of YES, the discriminative operation proceeds to step 41. In the case of NO, the discriminative operation proceeds to step 42. When it is discriminated at step 40 that the DC component of the transmit block patterned inter data is less than the predetermined threshold level, there is the possibility that it will be judged as a meaningless block at the transmit buffer memory 15, etc. so that a corresponding frame is dropped. For this reason, at step 41, the inter/intra selector 12 forcedly selects for output the transmit block patterned inter data. Thus, the discriminative operation is completed.

At step 42, a cumulative or accumulated added value of absolute values of the AC components of the transmit block patterned inter data, calculated by equation (9), and a cumulative or accumulated added value of absolute values of the AC components of the transmit block patterned intra data, calculated by equation (10), are compared with each other to discriminate whether or not the cumulative added value of absolute values of the AC components of the transmit block patterned inter data is less than the cumulative added value of absolute values of the AC components of the transmit block patterned intra data. In the case of YES, the discriminative operation proceeds to step 43. In the case of NO, the discriminative operation proceeds to step 44.

It will be appreciated that the cumulative added value of absolute values of the AC components of the transmit block patterned inter data and the cumulative added value of the AC components of the transmit block patterned intra data substantially correspond to the quantity of codes that would be produced if that data were subjected to retransform coding at the retransform encoder 14. For this reason, at step 43, in the case where the cumulative added value of absolute values of the AC components of the transmit block patterned inter data is greater than the cumulative added value of absolute values of the AC components of the transmit block patterned intra data, the inter/intra selector 12 selects transmit block patterned intra data to output it. Thus, the discriminative operation is completed. In contrast, at step 44, in the case where the cumulative added value of absolute values of the AC components of the transmit block patterned intra data is greater than the cumulative added value of absolute values of AC components of the transmit block patterned inter data, the inter/intra selector 12 selects transmit block patterned inter data to output it. Thus, the discriminative operation is completed.

A high-level pseudo-code program for carrying out such an inter/intra discrimination at the inter/intra selector 12 is as follows:

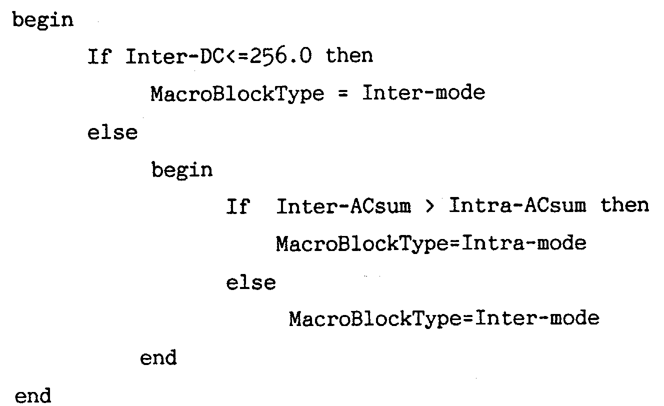

As stated above, by adopting such a configuration to respectively and independently implement orthogonal transform processing to the inter data and the intra data and thereafter to select for output transmit block patterned inter data or transmit block patterned intra data, it is possible to carry out inter/intra discrimination by determining only three values of: a DC component of transmit block patterned inter data; a cumulative added value of absolute values of the AC components of transmit block patterned inter data; and a cumulative added value of absolute values of the AC components of transmit block patterned intra data. Namely, by the above-mentioned configuration, the number of operations required for inter/intra discrimination at the inter/intra selector 12 can be reduced.

Transmit block patterned inter data or transmit block patterned intra data selected by the inter/intra selector 12 is output to a quantizer 13.

The quantizer 13 quantizes the transmit block patterned intra data or transmit block patterned inter data received with a quantization step size dependent upon residual data delivered from the transmit buffer memory 15 and outputs it as intra quantized picture data or inter quantized picture data. This intra quantized picture data or inter quantized picture data is input to a retransform encoder 14 and an inverse quantizer 19.

The inverse quantizer 19 inverse quantizes the transmit block patterned inter data or the transmit block patterned intra data received from the quantizer 13 to respectively deliver them as inverse quantized data to an inverse orthogonal transform circuit 20. The inverse orthogonal transform circuit 20 performs an orthogonal transform opposite to that of the second orthogonal transform of the second orthogonal transform circuit 5 upon the received inverse quantized data and outputs this as inverse orthogonally transformed data to a decoder 21. The decoder 21 decodes the inverse orthogonally transformed data delivered thereto. Data decoded by this decoder 21 is output to a predict earlier frame memory 22 as coding difference data, which is data indicating a difference between inter data of a current frame and inter data of an earlier frame. Predicted earlier frame data stored up to that time in the predict earlier frame memory 22 is subject to modifying operations by the coding difference data newly delivered. The predict earlier frame memory 22 stores the data that has been subjected to these modifying operations as new predicted earlier frame data. The predicted earlier frame data from the predict earlier frame memory 22 is subjected to motion compensation by the motion compensation circuit 6 having passed through the loop filter 7. The motion compensated data thus obtained is output to the subtracter 9. The subtracter 9, as described above, subtracts the predicted current frame data from macro block data of the current frame to generate inter data and outputs this to the second orthogonal transform circuit 5 serving as the second orthogonal transform means.

The retransform encoder 14 comprises a Variable Length Coding circuit or encoder (VLC circuit), etc. This retransform encoder 14 performs, for a second time, efficient coding processing upon the received quantized picture data and outputs this as transmit picture data to the transmit buffer memory 15.

The transmit buffer memory 15 stores the transmit picture data delivered to it, and reads out the stored transmit picture data at a predetermined transmission rate to a multiplexer 6.

The transmit buffer memory 15 also outputs residual data indicating the residual of the memory area available to the quantizer 13. The quantizer 13 carries out quantization at a quantization step width dependent upon the residual data it receives. When the quantizer 13 recognises from the residual data that there is no room in the memory of the buffer memory 15, it stops the quantization operation. Thus, there results a frame dropped state. As a result, overflow, etc. in the transmit buffer memory 15 is prevented. Further, since the configuration carries out inter/intra discrimination after orthogonal transformation of the data, it is sufficient to stop only the quantizer 13 in order to prevent overflow in the transmit buffer memory 15. For this reason, control points for preventing such overflow can be concentrated. Thus, so called "controllability" can be improved.

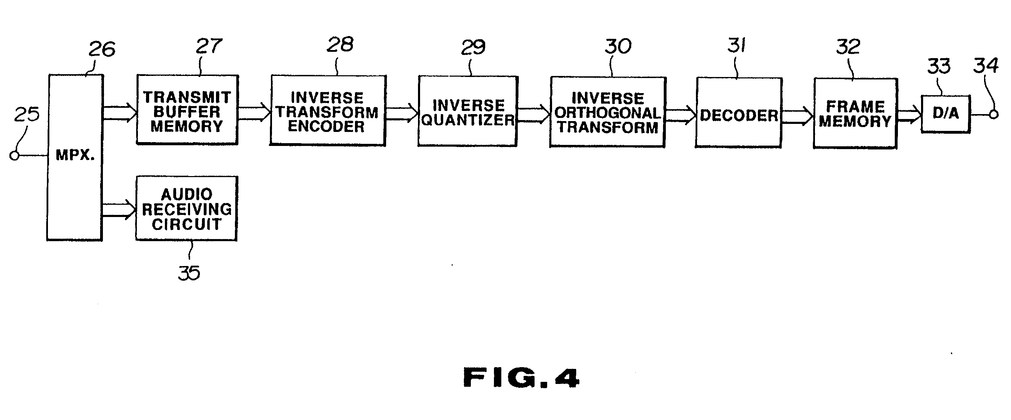

The multiplexer 16 synthesizes the transmit picture data received from the transmit buffer memory 15 and audio data received from an audio data generator 17 to output synthesized data through an output terminal 18. The synthesized data outputted through the output terminal 18 is passed to a decoding device as shown in Figure 4, for example, through a transmission path.

In Figure 4, the synthesized data delivered through the output terminal 18 shown in Figure 1 and the transmission path is received at a multiplexer 26 through an input terminal 25. The multiplexer 26 separates the synthesized data delivered thereto into transmit picture data and audio data and outputs the transmit picture data to a transmit buffer memory 27 and the audio data to an audio receiving circuit 35. The audio receiving circuit 35 demodulates the audio data delivered and supplies an audio signal to a speaker, etc., for example. The transmit buffer memory 27 stores and then reads out the transmit picture data to an inverse orthogonal transform encoder 28. The inverse orthogonal transform encoder 28 performs a transform coding process opposite to that of the retransform encoder 14 upon the transmit picture data to thereby transform it to inter quantized picture data or intra quantized picture data and output this to an inverse quantizer 29. The inverse quantizer 29 inverse-quantizes the inter quantized picture data or the intra quantized picture data delivered thereto thereby to transform such data to transformed coded data and to output this to an inverse orthogonal transform circuit 30. The inverse orthogonal transform circuit 30 performs an inverse orthogonal transformation upon the transformed coded data delivered thereto to thereby generate inter data or intra data and output this to a decoder 31. The decoder 31 carries out decoding processing of inter data or intra data delivered thereto to thereby transform such data to video data and output this to a D/A converter 33. The D/A converter 33 converts video data received to analog data and outputs this as a video signal. The video signal thus decoded is output through an output terminal 34, and is delivered to a monitor device, etc., a liquid crystal display tube. Thus, a picture transmitted to the monitor device can be displayed.

As is clear from the foregoing description, the coding apparatus for video signal according to this invention has a configuration to independently orthogonally transform inter data and intra data with respect to a video signal delivered thereto and thereafter to select either of the intra data and the intra data at the inter/intra selector 12, thereby making it possible to reduce the number of operations needed for inter/intra discrimination in the inter/intra selector 12, and to reduce the number of operational circuits needed for carrying out inter/intra discrimination, or the like. For this reason, the size of the operational circuits, etc. can be reduced. Thus, the hardware of the video signal coding apparatus can be miniaturized, and the cost therefor can be reduced.

In addition, by the above circuit configuration, it is sufficient for preventing overflow of the transmit buffer memory 15 to stop only the quantizer 13. As a result, control points for preventing overflow of the transmit buffer memory 15 can be concentrated. Thus, so called "controllability" can be improved.

In at least preferred embodiments this invention provides a coding apparatus for a video signal, which can reduce the number of operations needed for discriminating whether video data should be outputted as inter data or should be outputted as intra data, which can reduce the cost of the apparatus, and which is adapted to concentrate control points for prevention of overflow, etc., thus making it possible to carry out reliable control.

## Claims

1. Apparatus for coding a video signal (VD), said apparatus comprising:
intraframe coding means for intraframe coding a video signal;
interframe coding means (8, 9) for interframe coding a video signal;
first orthogonal transform means (4) for orthogonally transforming intraframe coded data from said intraframe coding means;
second orthogonal transform means (5) for orthogonally transforming interframe coded data from said interframe coding means; and
selector means (12) for selecting for output said intraframe coded data or said interframe coded data on the basis of coefficient data from said first and second orthogonal transform means; characterised in that
said video signal is a digital video signal and said intraframe coding means and said interframe coding means (8, 9) encode said digital video signal to form macro blocks (MB) having n x n pixels; said first and second orthogonal transform means (4, 5) perform discrete cosine transformation (DCT) upon said macro blocks (MB); and
when a cumulative value of AC components of DCT coefficient data. for said macro block (MB) determined by said second orthogonal transform means (4) is less than a cumulative value of AC components of DCT coefficient data for said macro block (MB) determined by said first orthogonal transform means (5), said selector means (12) selects interframe coded data; while, when said cumulative value of AC components of DCT coefficient data for said macro block (MB) determined by said second orthogonal transform means (5) is more than said cumulative value of AC components of DCT coefficient data for said macro block (MB) determined by said first orthogonal transform means (4), said selector means (12) selects intraframe coded data.

2. Apparatus as claimed in claim 1, wherein said interframe coding means (8, 9) includes motion compensating means (6).

3. Apparatus as claimed in claim 1, wherein, when a mean value of DC components of DCT coefficient data for a macro block (MB) determined by said second orthogonal means (5) is less than a predetermined threshold level, said selector means (12) selects interframe coded data irrespective of said tests of cumulative values of AC components.

4. Apparatus as claimed in claim 1, comprising a quantizer for receiving interframe coded data or intraframe coded data from said selector means, and a buffer memory for receiving quantized data from said quantizer, said quantizer being controlled in dependence upon an amount of memory area available in said buffer memory.

5. A method of coding a video signal (VD), said method comprising the steps of:
intraframe coding a video signal;
interframe coding a video signal;
orthogonally transforming intraframe coded data;
orthogonally transforming interframe coded data; and
selecting for output said intraframe coded data or said interframe coded data on the basis of coefficient data from orthogonal transformations of intraframe coded data and interframe coded data; characterized in that
said video signal is a digital video signal and said intraframe coding and serial interframe coding encode said digital video signal to form macro blocks (MB) having n x n pixel;
said orthogonally transforming intraframe coded data and said orthogonally transforming interframe coded data perform discrete cosine transformation (DCT) upon said macro blocks (MB); and
when a cumulative value of AC components of DCT coefficient data for said macro block (MB) determined by said orthogonal transforming of interframe coded data is less than a cumulative value of AC component of DCT coefficient data for said macro block (MB) determined by said orthogonal transforming of intraframe coded data, said interframe coded data is selected; while, when said cumulative value of AC components of DCT coefficient data for said macro block (MB) determined by said orthogonal transform of interframe coded data is more than said cumulative value of AC components of DCT coefficient data for said macro block (MB) determined by said orthogonal transforming of intraframe coded data, said intra-frame coded data is selected.

## Patentansprüche

1. Vorrichtung zur Codierung eines Videosignales (VD), wobei die Vorrichtung aufweist:
eine Zwischenbild-Codiereinrichtung zur Zwischenbildcodierung eines Videosignales;
eine Bild-zu-Bild-Codiereinrichtung (8, 9) zur Bild-zu-Bild-Codierung eines Videosignales;
eine erste Orthogonal-Transformationseinrichtung (4) zur Orthogonal-Transformation der zwischenbildcodierten Daten von der Zwischenbild-Codiereinrichtung;
eine zweite Orthogonal-Transformationseinrichtung (5) zur Orthogonal-Transformation der Bild-zu-Bild-codierten Daten von der Bild-zu-Bild-Codiereinrichtung; und
eine Auswahleinrichtung (12) zur Auswahl der zwischenbildcodierten Daten oder der Bild-zu-Bild-codierten Daten als Ausgabe auf Basis der Koeffizientendaten von der ersten oder zweiten Orthogonal-Transformationseinrichtung;
**dadurch gekennzeichnet,** daß das Videosignal ein Digital-Videosignal ist und die Zwischenbild-Codiereinrichtung und die Bild-zu-Bild-Codiereinrichtung (8, 9) das Digital-Videosignal codieren, um Makroblöcke (MB) mit n x n Pixeln zu bilden; die erste und zweite Orthogonal-Transformationseinrichtung (4, 5) eine diskrete Cosinus-transformation (DTC) auf die Makroblöcke (MB) ausführt; und
wenn ein kumulativer Wert der AC-Komponenten der DTC-Koeffizientendaten für den Makroblock (MB), die durch die zweite Orthogonal-Transformationseinrichtung (4) bestimmt wird, geringer ist als ein kumulativer Wert der AC-Komponenten der DTC-Koeffizientendaten für den Makroblock (MB), der durch die erste Orthogonal-Transformationseinrichtung (5) bestimmt wird, die Auswahleinrichtung (12) die Bild-zu-Bild-codierten Daten auswählt; während, wenn der kumulative Wert der AC-Komponenten der DCT-Koeffizientendaten für den Makroblock (MB), der durch die zweite Orthogonal-Transformationseinrichtung (5) bestimmt wird, größer ist, als der kumulative Wert der AC-Komponenten der DCT-Koeffizientendaten für den Makroblock (MB), der durch die erste Orthogonal-Transformationseinrichtung (4) bestimmt ist, die Auswahleinrichtung (12) die zwischenbildcodierten Daten auswählt.

2. Vorrichtung gemäß Anspruch 1,
wobei die Bild-zu-Bild-Codiereinrichtung (8, 9) eine Bewegungskompensationseinrichtung (6) enthält.

3. Vorrichtung gemäß Anspruch 1,
wobei dann, wenn ein Mittelwert der DC-Komponenten der DCT-Koeffizientendaten für einen durch die zweite Orthogonal-Transformationseinrichtung (5) bestimmten Makroblock (B) kleiner als ein festgelegter Schwellenwert ist, die Auswahleinrichtung (12) die Bild-zu-Bild-codierten Daten ungeachtet der Tests der kumulativen Werte der AC-Komponenten wählt.

4. Vorrichtung gemäß Anspruch 1,
aufweisend einen Quantisierer zum Empfang der Bild-zu-Bild-codierten Daten oder der zwischenbildcodierten Daten von der Auswahleinrichtung, und einen Pufferspeicher zum Empfang von quantisierten Daten von dem Quantisierer, wobei der Quantisierer in Abhängigkeit eines Wertes von verfügbarem Speicherraum in dem Pufferspeicher gesteuert wird.

5. Verfahren zur Codierung eines Videosignales (VD), wobei das Verfahren die Schritte aufweist:
Zwischenbildcodierung eines Videosignales;
Bild-zu-Bild-Codierung eines Videosignales;
Orthogonal-Transformation der zwischenbildcodierten Daten;
Orthogonal-Transformation der Bild-zu-Bild-codierten Daten; und
Auswahl der zwischenbildcodierten Daten oder die Bild-zu-Bild-codierten Daten zur Ausgabe auf Basis der Koeffizientendaten von den Orthogonal-Transformationen der zwischenbildcodierten Daten oder der Bild-zu-Bild-Daten;
**dadurch gekennzeichnet,** daß das Videosignal ein Digital-Videosignal ist und die Zwischenbildcodierung und serielle Bild-zu-Bild-Codierung das Digital-Videosignal codiert, um Makroblöcke (MB) mit n x n Pixeln zu bilden;
die Orthogonal-Transformation der zwischenbildcodierten Daten und die Orthogonal-Transformation der Bild-zu-Bild-codierten Daten eine diskrete Cosinus-Transformation (DCT) bezüglich der Makroblöcke (MB) ausführt; und
wenn ein kumulativer Wert der AC-Komponenten der DCT-Koeffizientendaten von dem durch Orthogonal-Transformation der Bild-zu-Bild-codierten Daten bestimmten Makroblock (MB) geringer ist als ein kumulativer Wert der AC-Komponenten der DCT-Koeffizientendaten für den durch Orthogonal-Transformation der zwischenbildcodierten Daten bestimmten Makroblock (MB) ist, die Bild-zu-Bild-codierten Daten gewählt werden; während, wenn der kumulative Wert der AC-Komponenten der DCT-Koeffizientendaten für den durch Orthogonal-Transformation der Bild-zu-Bild-codierten Daten bestimmten Makroblock (MB) größer als der kumulative Wert der AC-Komponenten der DCT-Koeffizientendaten für den durch Orthogonal-Transformation der zwischenbildcodierten Daten bestimmten Makroblock (MB) ist, die zwischenbildcodierten Daten gewählt werden.

## Revendications

1. Dispositif pour coder un signal vidéo (VD), ledit dispositif comprenant :
un moyen de codage interne à la trame pour coder, à l'intérieur d'une trame, un signal vidéo ;
un moyen de codage entre trames (8, 9) pour coder, entre trames, un signal vidéo ;
un premier moyen de transformation orthogonale (4) pour transformer orthogonalement une donnée codée à l'intérieur de la trame provenant dudit moyen de codage interne à la trame ;
un second moyen de transformation orthogonale (5) pour transformer orthogonalement une donnée codée entre trames provenant dudit moyen de codage entre trames ; et
un moyen de choix (12) pour choisir comme sortie ladite donnée codée à l'intérieur de la trame ou ladite donnée codée entre trames, sur la base d'une donnée de coefficient provenant desdits premier et second moyens de transformation orthogonale ; caractérisé :
en ce que ledit signal vidéo est un signal vidéo numérique et ledit moyen de codage interne à la trame et ledit moyen de codage entre trames (8, 9) codent ledit signal vidéo numérique pour former des macroblocs (MB) ayant n x n pixels; lesdits premier et second moyens de transformation orthogonale (4, 5) effectuant une transformation cosinus discrète sur lesdits macroblocs (MB) ; et
en ce que, lorsqu'une valeur cumulative de composantes de courant alternatif de données de coefficient DCT pour ledit macrobloc (MB) déterminé par ledit second moyen de transformation orthogonale (5) est plus petite qu'une valeur cumulative de composantes de courant alternatif de données de coefficient DCT pour ledit macrobloc (MB) déterminé par ledit premier moyen de transformation orthogonale (4), ledit moyen de choix (12) choisit la donnée codée entre trames ; tandis que, lorsque ladite valeur cumulative de composantes de courant alternatif de données de coefficient DCT pour ledit macrobloc (MB) déterminé par ledit second moyen de transformation orthogonale (5) est plus grande que ladite valeur cumulative de composantes de courant alternatif de données de coefficient DCT pour ledit macrobloc (MB) déterminé par ledit premier moyen de transformation orthogonale (4), ledit moyen de choix (12) choisit la donnée codée à l'intérieur de la trame.

2. Dispositif selon la revendication 1, dans lequel ledit moyen de codage entre trames (8, 9) comprend un moyen de compensation de mouvement (6).

3. Dispositif selon la revendication 1, dans lequel lorsqu'une valeur moyenne de composantes de courant continu de donnée de coefficient DCT pour un macrobloc (MB) déterminé par ledit second moyen de transformation orthogonale (5) est plus petite qu'un niveau de seuil prédéterminé, ledit moyen de choix (12) choisit la donnée codée entre trames quels que soient les contrôles de valeurs cumulatives de composantes de courant alternatif.

4. Dispositif selon la revendication 1, comprenant un quantificateur pour recevoir une donnée codée entre trames ou une donnée codée à l'intérieur de la trame provenant dudit moyen de choix, et une mémoire tampon pour recevoir une donnée quantifiée provenant dudit quantificateur, ledit quantificateur étant commandé en fonction de l'importance d'une zone de mémoire disponible dans ladite mémoire tampon.

5. Procédé de codage d'un signal vidéo (VD), ledit procédé comprenant les étapes :
de codage à l'intérieur de la trame d'un signal vidéo ;
de codage entre trames d'un signal vidéo ;
de transformation de façon orthogonale de la donnée codée à l'intérieur de la trame ;
de transformation de façon orthogonale de la donnée codée entre trames ; et
de choix comme sortie de ladite donnée codée à l'intérieur de la trame ou de ladite donnée codée entre trames sur la base d'une donnée de coefficient provenant des transformations orthogonales de la donnée codée à l'intérieur de la trame et de la donnée codée entre trames ; caractérisé :
en ce que ledit signal vidéo est un signal vidéo numérique et ledit moyen de codage interne à la trame et ledit moyen de codage sériel entre trames codent ledit signal vidéo numérique pour former des macroblocs (MB) ayant n x n pixels ;
en ce que ladite transformation de façon orthogonale de la donnée codée à l'intérieur de la trame et ladite transformation de façon orthogonale de la donnée codée entre trames effectuent une transformation cosinus discrète (DCT) sur lesdits macroblocs (MB) ; et
en ce que, lorsqu'une valeur cumulative de composantes de courant alternatif de données de coefficient DCT pour ledit macrobloc (MB) déterminé par ladite transformation orthogonale de la donnée codée entre trames est plus petite qu'une valeur cumulative de composantes de courant alternatif de données de coefficient DCT pour ledit macrobloc (MB) déterminé par ladite transformation orthogonale de la donnée codée à l'intérieur de la trame, on choisit ladite donnée codée entre trames ; tandis que, lorsque ladite valeur cumulative de composantes de courant alternatif de données de coefficient DCT pour ledit macrobloc (MB) déterminé par ladite transformation orthogonale de la donnée codée entre trames est plus grande que ladite valeur cumulative de composantes de courant alternatif de données de coefficient DCT pour ledit macrobloc (MB) déterminé par ladite transformation orthogonale de la donnée codée à l'intérieur de la trame, on choisit ladite donnée codée à l'intérieur de la trame.
